# EUROPEAN PATENT SPECIFICATION

(11) **EP 0 377 326 B1**
(45) Date of publication and mention of the grant of the patent: **31.08.1994**
(21) Application number: 89313642.4
(22) Date of filing: 28.12.1989
(51) Int. Cl.: C09C 1/00, C03C 17/23

(54) **Method for the preparation of a transparent metal oxide pigment**
Verfahren zur Herstellung eines durchscheinenden Metalloxidpigmentes
Procédé de fabrication d'un pigment transparent à base d'oxyde de métal

(30) Priority: 28.12.1988 FI 886018
(43) Date of publication of application: 11.07.1990
(73) Proprietor: KEMIRA OY, SF-00180 Helsinki (FI)
(72) Inventor: Vapaaoksa, Pekka Juhani, SF-28660 Pori (FI); Eskelinen, Pekka Juhani, SF-28660 Pori (FI)
(74) Representative: Collier, Jeremy Austin Grey

(56) References cited:
- EP-A- 0 287 354
- US-A- 3 331 699
- US-A- 3 758 284
- US-A- 4 192 691

## Description

The present invention relates to the preparation of transparent metal oxide pigment, in which silicon dioxide is dissolved off from silicon dioxide based particles coated with transparent metal oxide.

Attempts have been made to produce a nacreous effect, interference color and color brightness, by stratifying transparent metal oxides on silicon dioxide based particles having a suitable size and shape. Thus, nacreous pigment has been prepared by coating layer silicate particles, such as mica particles, with a thin layer of transparent metal oxide, such as titanium dioxide in anatase or rutile form. The problem has been that most mica-like layer silicates are too dark to form the substrate of a metal oxide pigment. The lighter kinds of mica, such as muscovite, are not so common as the dark ones and are, accordingly, more expensive. Moreover, the layer silicates are darkened in the calcination process used in the preparation of a metal-oxide-coated mica product.

Furthermore, micas and other layer silicates coated with transparent metal oxide have the drawback that they are too heavy for dispersion and orientation in a suitable manner in a coating. The interference and reflection colors produced with them are often too faint because of the bad orientation and/or too extensive color distribution of the particles. Moreover, it is hard to grind mica particles to a suitable size of nacreous pigment.

When transparent metal oxide is stratified on quartz or glass particles, the color problems caused by the substrate are not too great. According to US patent specification 3,331,699, adhesion, however, does not take place directly to the substrate, but through the oxide of another metal, such as tin. This intermediate layer can, for its part, also cause color problems. Moreover, quartz and glass particles are as heavy as mica particles and thus they too cause the above-mentioned dispersion and orientation problems.

An endeavour has been made in US patent specification 4,192,691 to solve these problems. In this specification there
is described a treatment of metal-oxide-coated muscovite particles at elevated temperature with aqueous acid solution containing hydrofluoric acid and mineral acid until the desired amount of muscovite mica has been extracted. The substantially coreless pigment disperses well and its interference color is brighter than that of an untreated pigment. By this known method using a very strong acid composition, it is possible to extract mica very efficiently from mica particles coated with a transparent metal oxide. A drawback is, however, that a strong acid composition also dissolves the titanium oxide. This is true, particularly, for titanium oxide in anatase crystal form, a layer of which becomes so much thinner that the interference color of the pigment changes because of this treatment. Thus, it is very difficult to regulate the extraction process so that exactly the desired color is achieved. Moreover, a lot of hard-to-treat fluoride residue is produced in the process.

FI patent application No: 871644 discloses a method for the preparation of nacreous pigment based on metal-oxide-coated mica or other layer silicate particles, in which coated mica or other layer silicate particles are prepared from mica or other layer silicate particles and a metal-oxide-coating in a pre-stage, in which pre-stage the metal-oxide-coating is scarcely or non-dissolvable in acid, and the thus-obtained mica or other layer silicate particles are then dissolved with mineral acid, optionally with an oxidizer. In this way, the mica or other layer silicate particle substrate is partially dissolved in the acid so that the metal-oxide-coated, substantially non-cationic and porous silicon dioxide bodies of the mica or other layer silicate particles remain.

Such a method, which is based on partial extraction, has been devised because the mineral acid treatment removes the color causing cations, e.g. the iron, from dark kinds of mica, such as phlogopite. The silicon dioxide bodies have been deliberately unextracted since the above-mentioned drawbacks would have been involved in their extraction and, moreover, pigment particles furnished with silicon dioxide bodies are stronger than hollow metal oxide particles. The pigments obtained can, however, be too heavy for certain purposes and their interference colors can be too weak to produce the desired nacreous effect. Furthermore, it is difficult to grind pigment particles having the silicon dioxide body left, into a suitable nacreous pigment size.

Accordingly, the above-mentioned solutions of the prior art have many drawbacks and, moreover, their applications are too restricted. The present invention provides a method for the preparation of a transparent metal oxide pigment by which the drawbacks mentioned can be removed. Thus, the present invention provides a method for the preparation of transparent metal oxide pigment comprising dissolution of a substantial portion of the silicon dioxide off from silicon dioxide based particles coated with transparent metal oxide characterized by selecting for the dissolution particles whose silicon dioxide portion is substantially soluble in base and whose metal oxide portion is substantially insoluble in base and by carrying out the dissolution with base.

It has thus been realized that a transparent pigment consisting substantially of metal oxide can be prepared by selecting the silicon dioxide based particles coated with transparent metal oxide so that the silicon dioxide part is substantially soluble in base and the metal oxide part is substantially insoluble in base, and then dissolving a substantial part of the silicon dioxide with the base. Thus in the method of the invention by selecting a suitable silicon dioxide-based substrate or by treating it in a suitable manner for achieving base solubility, the silicon dioxide can be dissolved by a simple base extraction. By the method of the invention the hydrofluoric dissolution of the prior art, and the drawbacks it causes, are avoided.

According to one embodiment of the invention, the silicon dioxide based particles used in the method are originally base-soluble material. Pure silicon dioxide silicate compounds having few cations are such compounds. The material is brought from the melt state or solution to the desired particle size and shape, after which the particles are coated with a base-insoluble metal oxide layer, e.g. by precipitation or calcination, so that they can be extracted with base in accordance with the method of the invention.

According to another embodiment of the invention, the silicon dioxide based particles used in the method are at the beginning insoluble in base. They are first coated with metal oxide coating so that the metal oxide coating is substantially insoluble in acid and base. Then the metal oxide-coated particles are dissolved with acid, preferably mineral acid, optionally together with an oxidizer. As a result of the dissolution the silicon dioxide-based particles become base soluble and the silicon dioxide can be extracted with a base.

Coating and acid extraction of this kind has been used in the FI application 871644 to improve pigment, but this specification does not disclose that the silicon dioxide could then be removed by a simple base extraction.

The transparent metal oxide pigment made by the method of the invention can consist of any suitable metal oxide, such as titanium dioxide in anatase or rutile form, trivalent iron oxide, zirconium oxide, zinc oxide, antimony oxide, chromium oxide, cobalt oxide, etc. It can also consist of a mixture of oxides, such as zinc/antimony oxide, cobalt/aluminate, etc. As the method according to the prior art is particularly detrimental to titanium dioxide in anatase crystal form, the present invention is particularly well suited for the preparation of anatase pigment.

The silicon dioxide based particles used in the method according to the invention are preferably silicon dioxide, glass or silicate particles in layer or flake form. Particularly well suited for the preparation of nacreous pigments are particles of layer silicates, such as mica, and glass particles. These kinds of particles require, however, extraction with acid for the removal of cations. Not until a substantial portion of the cations has been removed do they become base soluble and removable with base. Since the structure of light kinds of mica does not favor selective extraction of cations with acid, it is preferable to apply the invention to so-called dark kinds of mica, such as phlogopite or biotite. A preferred breadth of the mica particles used is about 1-300µm and a preferred thickness about 0.1-5µm.

The silicon dioxide based particles are coated with metal oxide which is substantially insoluble in extraction liquids. The coating is preferably carried out so that a pre-stage of metal oxide, e.g. hydroxide, oxyhydrate or hydrate, is precipitated on the particles and the thus-obtained particles are calcined. The calcination can darken to some degree the silicon dioxide body of some kinds of particle, but since in the present invention the silicon dioxide is dissolved, the calcination stage does not cause any color damage to the pigment.

In the embodiment of the invention in which at the beginning the insoluble particles are treated with acid to achieve base solubility, it is preferable to use a mineral acid, such as sulphuric acid, hydrochloric acid or nitric acid, for the dissolution. Moreover, it is preferable to carry out the acid dissolution with some oxidizer, such as nitric acid or hydrogen peroxide. The concentration of the acid is preferably about 0.7-70% by weight, preferably about 1-50% by weight. The dissolution in acid is carried out at a temperature below about 100°C, preferably between 20 and 100°C, and the dissolution time is preferably about 2-30 hours.

The final transparent metal oxide pigment is prepared by dissolving with base a substantial portion of the silicon dioxide of the metal-oxide-coated silicon dioxide-based particles. This takes place so that, for the base dissolution, are selected metal-oxide-coated particles that are soluble in base, or metal-oxide-coated particles that have been treated to make their cores base-soluble. Any base capable of causing the dissolution is suitable, e.g. sodium hydroxide or potassium hydroxide. Preferably, the concentration of the base is 1-30% by weight, more preferably 5-20% by weight, and it is advantageous to use an aqueous solution. The temperature of the base extraction can be any temperature at which the silicon dioxide and base are in contact with each other. A preferred temperature is between 20-110°C, more preferably between 70-90°C. The extraction time is preferably between 1-16 h, more preferably between 6-9 h.

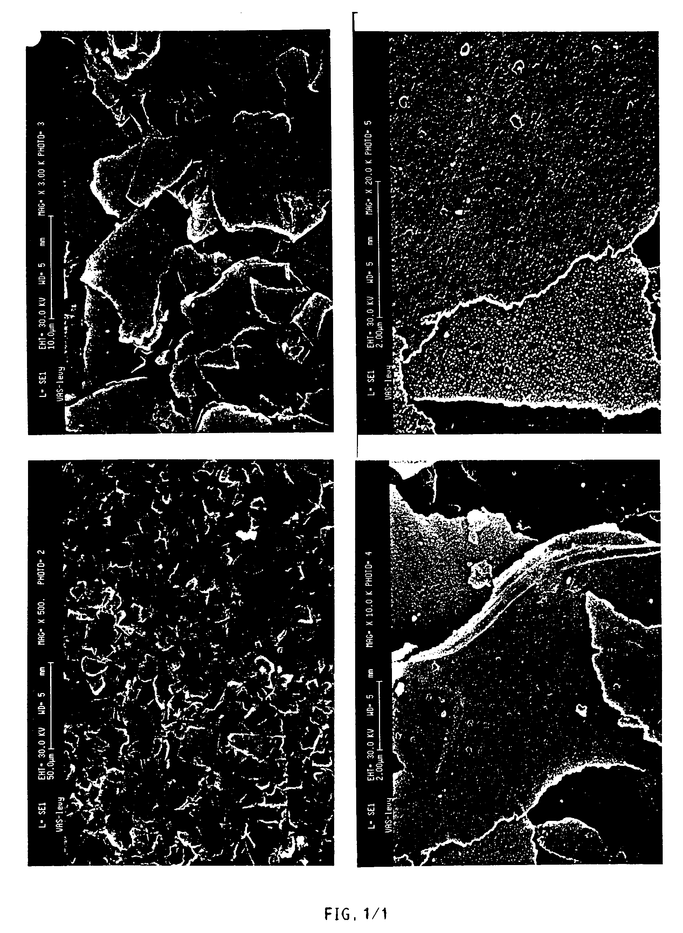

While with the dissolution methods of the prior art hollow or porous pigment particles are obtained, with the method of the present invention a transparent metal oxide pigment is obtained, the shape of whose particles only fragmentarily corresponds to the shape of the silicon dioxide-based particles so that the pigment is in form of single closed sheets or particles. The fragmentarity can be due to the fact that the dissolution releases the various surfaces of the metal oxide coating of the original particle, so that the result is a multitude of loose, closed and very thin sheets. In Figure 1 there is presented electron microscope photographs with different magnification of titanium dioxide pigment particles, which have been prepared by dissolving the cations and the silicon dioxide body from the titanium-dioxide-coated mica particles.

The greatest dimension of the pigment particles in the form of separate closed sheets is preferably about 1-300µm and the thickness is preferably about 0.001-0.3µm, most preferably about 0.01-0.2µm. By changing the conditions of the metal oxide precipitation the thickness can be regulated so as to reflect a certain color tone at an accuracy of below 0.001µm up to a thickness of 0.3µm.

The transparent metal oxide pigment made according to the invention preferably does not contain more than 10% by weight of silicon dioxide. It contains at least 60% by weight and preferably at least about 90% by weight of metal oxide, e.g. titanium dioxide or iron oxide.

In the method according to the invention the control of the size and the shape of the crystals in the pigment particles is, moreover, possible with a very great accuracy, so that a product is obtained that reflects very selectively a certain wavelength range. It is consequently easier to control reproducibly the decorative effect in applications, e.g. in paints and printing ink, than e.g. with the hard-dispersing microcrystalline titanium dioxide.

Compared with the method according to US patent specification 4,192,691, in which detrimental fluorine compounds are produced as by-products, the method according to the present invention produces waterglass as by-product, which is a harmless or even useful material. Moreover, in the known method the metal oxide corrodes, whereby pigment particles are formed which have various thicknesses and reflect occasional interference colors. In the present invention the thickness of the particles can be accurately regulated. Furthermore, the known particles are always hollow or porous, whereas the particles according to the present invention can, when so desired, be compact particles with even color.

According to the attached examples it is possible to prepare particles in sheet form by using sheetformed metal oxide pigment with silicon dioxide body according to the FI patent specification 871644 equivalent to EP-A-0287354.

### Example 1

40g of nacreous pigment reflecting green light and consisting of mica coated with titanium dioxide, which has been treated with acid, is elutriated into 250g of ion exchanged water. 45g of sodium hydroxide granules is added to the suspension. The suspension is heated to a temperature of 80°C. The suspension is agitated for 5 hours at the above-mentioned temperature. Thereafter the solid matter is separated by filtering and washed. The washed product is dried at a temperature of 120°C for 16 hours. A chemical analysis reveals that a nacreous pigment containing 93% TiO₂ and 4% SiO₂ has been obtained. The nacreous color is very strong and pure in tone.

### Example 2

40g of nacreous pigment reflecting blue and consisting of mica coated with titanium dioxide is elutriated into 250ml of sodium hydroxide solution containing 180g/l sodium hydroxide. The suspension is heated to a temperature of 75°C. The mixture is agitated for 8 hours at this temperature. After this the pigment is separated from the suspension by filtering and washed. According to a chemical analysis the pigment contains 91% of TiO₂ and 6% of SiO₂.

### Example 3

80g of nacreous pigment reflecting red and consisting of mica coated with titanium dioxide is elutriated into 1000ml of 7.5% potassium hydroxide solution. The suspension is heated to a temperature of 85°C. The mixture is agitated for 10 hours, after which the pigment is separated by filtering and washed. The product is dried for 20 hours at a temperature of 130°C. The ready pigment contains 89% to TiO₂ and 6% of SiO₂. The red nacreous color of the pigment is very pure.

### Example 4

10g of nacreous pigment reflecting violet, treated with acid, and consisting of mica coated with titanium dioxide is elutriated into 250ml of 15% sodium hydroxide solution containing 180g/l sodium hydroxide. The suspension is heated to a temperature of 70°C for 5 hours. The pigment is separated by filtering from the mother solution and washed so as to contain no salt. The drying is carried out at a temperature of 110°C for 20 hours. The nacreous pigment obtained contains 91% of TiO₂ and 5% of SiO₂ and reflects violet.

### Example 5

15g of acid-treated iron-coated mica pigment is elutriated into 500g of ion-exchanged water. To the suspension is added 15g of sodium hydroxide granules. The temperature of the suspension is raised to 80°C. The pigment is separated after 19 hours from the suspension and washed. The product obtained contains 90% iron oxide.

### Example 6

Acid-treated, titanium dioxide-coated mica pigment is elutriated into 15g of water. 30g of sodium hydroxide granules are added. The mixture is heated at 80°C for 5 hours. The pigment is washed and dried. The titanium dioxide content of the product is over 90%. The titanium dioxide is in rutile form. The analysis gave:

| | TiO₂, % |
|---|---|
| original mica pigment | 20 - 50 |
| Acid-extracted pigment | 30 - 60 |
| Base-extracted pigment | over 90 |

## Claims

1. Method for the preparation of transparent metal oxide pigment comprising dissolution of a substantial portion of the silicon dioxide off from silicon dioxide based particles coated with transparent metal oxide, characterized by selecting for the dissolution particles whose silicon dioxide portion is substantially soluble in base and whose metal oxide portion is substantially insoluble in base and by carrying out the dissolution with base.

2. Method according to Claim 1, characterized in that the particles are metal-oxide-coated silicate or glass particles, which have been pretreated to achieve base solubility by extraction with mineral acid, such as sulphuric acid, hydrochloric acid or nitric acid, preferably together with an oxidizer, such as nitric acid or hydrogen peroxide.

3. Method according to Claim 2, characterized in that the silicate particles consist of layer silicate, such as phlogopite or biotite.

4. Method according to Claim 1, characterized in that the particles are metal-oxide-coated silicon dioxide particles or metal-oxide-coated, substantially non-cationic silicate particles.

5. Method according to any one of the previous Claims, characterized in that the transparent metal oxide is titanium dioxide.

6. Method according to any one of Claims 1 to 4, characterized in that the transparent metal oxide is iron oxide.

7. Method according to any one of the previous Claims, characterized in that the silicon dioxide based particles coated with transparent metal oxide have been prepared by precipitating the metal as hydroxide or oxyhydrate onto the surface of the silicon dioxide based particles and then calcining the particles obtained.

8. Method according to any of the previous Claims, characterized in that the dissolution with base is carried out with sodium hydroxide or potassium hydroxide.

9. Method according to any of the previous Claims, characterized in that the dissolution with base is carried out with an aqueous solution containing 1-30% by weight, preferably 5-20% by weight, of the said base.

## Patentansprüche

1. Verfahren zur Herstellung eines durchsichtigen Metalloxidpigments unter Auflösung eines wesentlichen Anteils des Siliziumdioxids aus auf Siliuiumdioxid basierenden Teilchen, die mit einem durchsichtigen Metalloxid beschichtet sind,
**dadurch gekennzeichnet,**
daß für das Auflösen Teilchen ausgewählt werden, deren Siliziumdioxidanteil im wesentlichen in einer Base lösbar ist und deren Metalloxidanteil in einer Base im wesentlichen unlöslich ist, und daß die Lösung mit der Base ausgetragen wird.

2. Verfahren nach Patentanspruch 1,
**dadurch gekennzeichnet,**
daß die Teilchen mit Metalloxid beschichtete Silikatteilchen oder Glasteilchen sind, die vorbehandelt worden sind, um eine Lösbarkeit in der Base durch Extrahieren mit Mineralsäure zu erhalten, beispielsweise mit Schwefelsäurse, Chlorwasserstoffsäure, Salpetersäure oder Wasserstoffperoxid.

3. Verfahren nach Patentanspruch 2,
**dadurch gekennzeichnet,**
daß die Silikatteilchen aus Schichtsilikaten bestehen, beispielsweise aus Phlogopit oder Biotit.

4. Verfahren nach Patentanspruch 1,
**dadurch gekennzeichnet,**
daß die Teilchen mit Metalloxid beschichtete Siliziumdioxidteilchen sind oder mit Metalloxid beschichtete, im wesentlichen nicht-kationische Silikatteilchen.

5. Verfahren nach einem der Patentansprüche 1 - 4,
**dadurch gekennzeichnet,**
daß das durchsichtige Metalloxid Titandioxid ist.

6. Verfahren nach einem der Patentansprüche 1 - 4,
**dadurch gekennzeichnet,**
daß das transparante Metalloxid Eisenoxid ist.

7. Verfahren nach einem der Ansprüche 1 - 6,
**dadurch gekennzeichnet,**
daß die auf Siliziumdioxid basierenden und mit transparentem Metalloxid beschichteten Teilchen dadurch hergestellt wurden, daß das Metall als Hydroxid oder Oxihydrat auf der Oberfläche der auf Siliziumdioxid basierenden Teilchen abgeschieden wurde, worauf die erhaltenen Teilchen gebrannt wurden.

8. Verfahren nach einem der Patentansprüche 1 - 7,
**dadurch gekennzeichnet,**
daß die Losung mit der Base mit Natriumhydroxid oder Kaliumhydroxid ausgetragen wird.

9. Verfahren nach einem der Patentansprüche 1 - 8,
**dadurch gekennzeichnet,**
daß die Lösung mit der Base mit einer wässrigen Lösung ausgetragen wird, die 1 - 30 Gew.% der Base enthält, vorzugsweise 5 - 20 Gew.%.

## Revendications

1. Procédé de fabrication d'un pigment transparent à base d'oxyde métallique qui comprend la dissolution d'une fraction substantielle de dioxyde de silicium en dehors des particules à base de dioxyde de silicium recouvertes avec un oxyde métallique transparent, caractérisé par le fait que l'on choisit pour la dissolution, des particules dont la fraction de dioxyde de silicium est substantiellement soluble dans une base et dont la fraction d'oxyde métallique est substantiellement insoluble dis une base et que l'on effectue la dissolution avec une base.

2. Procédé selon la revendication 1, caractérisé en ce que les particules sont des particules de silicate ou de verre recouvertes d'oxyde métallique, qui ont été pré-traitées pour réaliser la solubilité dis une base, par extraction avec un acide minéral, tel que l'acide sulfurique, l'acide chlorhydrique ou l'acide nitrique de préférence conjointement à un agent oxydant tel que l'acide nitrique ou le peroxyde d'hydrogène.

3. Procédé selon la revendication 2, caractérisé en ce que les particules de silicate consistent en des couches de silicate telle que la phlogopite ou la biotite.

4. Procédé selon la revendication 1, caractérisé en ce que les particules sont des particules de dioxyde de silicium recouvertes d'oxyde métallique ou des particules de silicate substantiellement non cationiques recouvertes d'oxyde métallique.

5. Procédé selon l'une quelconque des revendications précédentes, caractérisé en ce que l'oxyde métallique transparent est le dioxyde de titane.

6. Procédé selon l'une quelconque des revendications 1 à 4, caractérisé en ce que l'oxyde métallique transparent est de l'oxyde de fer.

7. Procédé selon l'une quelconque des revendications précédentes, caractérisé en ce que les particules à base de dioxyde de silicium recouvertes d'oxyde métallique transparent, ont été préparées par précipitation du métal sous forme d'hydroxyde ou d'oxyhydrate sur la surface des particules à base de dioxyde de silicium et, ensuite, par calcination des particules obtenues.

8. Procédé selon chacune des revendications précédentes, caractérisé en ce que la dissolution avec une base est effectuée avec de l'hydroxyde de sodium ou de l'hydroxyde de potassium.

9. Procédé selon chacune des revendications précédentes, caractérisé en ce que la dissolution avec une base est effectuée avec une solution aqueuse contenant de 1 à 30 % en poids, de préférence de 5 à 20% en poids de la dite base.
